# EUROPÄISCHE PATENTSCHRIFT

(11) **EP 1 121 675 B1**
(45) Veröffentlichungstag und Bekanntmachung des Hinweises auf die Patenterteilung: **05.04.2006**
(21) Anmeldenummer: 99953852.3
(22) Anmeldetag: 15.10.1999
(51) Int. Cl.: G08G 1/09, G01C 21/20

(54) **VERFAHREN ZUR ERMITTLUNG VON FAHRTROUTENDATEN IN EINEM KRAFTFAHRZEUG**
METHOD FOR DETERMINING TRAVEL ROUTE DATA IN A MOTOR VEHICLE
PROCEDE DE DETERMINATION DE DONNEES D'ITINERAIRE ROUTIER

(30) Priorität: 17.10.1998 DE 19847953
(43) Veröffentlichungstag der Anmeldung: 08.08.2001
(73) Patentinhaber: Delphi Technologies, Inc., Troy, MI 48098 (US)
(72) Erfinder: FISCHER, Ines, D-90489 Nürnberg (DE); HORN, Georg, D-91301 Forchheim (DE); LEBENDER, Joerg, D-91466 Gerhardshofen (DE); PASCHOLD, Udo, D-90765 Fuerth (DE)
(74) Vertreter: Manitz, Finsterwald & Partner GbR
(86) Internationale Anmeldenummer: PCT/EP1999/007822
(87) Internationale Veröffentlichungsnummer: WO 2000/023962

(56) Entgegenhaltungen:
- EP-A- 0 786 646
- EP-A- 0 803 853
- EP-A- 0 871 010
- WO-A-98/15075
- GB-A- 2 195 868
- US-A- 5 543 789

## Beschreibung

Die Erfindung betrifft ein Verfahren zur Ermittlung von Fahrtroutendaten in einem Kraftfahrzeug mit den im Oberbegriff des Anspruchs 1 angegebenen Merkmalen. Weiterhin betrifft die Erfindung eine Vorrichtung zur Ermittlung von Fahrtroutendaten in einem Kraftfahrzeug.

Es sind bereits Navigationssysteme bekannt, bei welchen in einem Kraftfahrzeug nach Eingabe eines gewünschten Fahrtzieles unter Verwendung von auf einer CD-ROM gespeicherten Landkartendaten und von mittels eines GPS-Empfängers gewonnenen Fahrzeugpositionsdaten Fahrtroutendaten ermittelt und dem Benutzer auf einem Bildschirm oder über. Lautsprecher signalisiert werden. Ein Beispiel für ein derartiges "statisches" Navigationssystem ist das Navigationssystem GPS1 der Anmelderin, welches über den Fachhandel käuflich erworben werden kann.

Weiterhin ist aus dem Buch "Digitale Technik für Hörfunk und Femsehen" von Paul Dambacher, herausgegeben vom R. v. Decker's Verlag, G. Schenck GmbH, Heidelberg, 1995, Seite 100-140, das digitale terrestrische Hörrundfunksystem DAB bekannt. Bei diesem wird zwischen zwei Kanälen unterschieden, dem Main Service Channel MSC, und dem Fast Information Channel FIC. Der Main Service Channel enthält die Audio-Dienste (inklusive Program Associated Data, kurz mit PAD bezeichnet) zusammen mit diversen Datendiensten. Der Fast Information Channel enthält Informationen über den aktuellen oder auch zukünftigen Inhalt des Main Service Channel (MCI, SI, Datenraten, Höhe des Fehlerschutzes). Seine Information wird häufig wiederholt, wodurch sich die Übertragungssicherheit entsprechend erhöht.

Aus der EP-A-O 871 010 ist ein Navigationssystem für ein Fahrzeug nach dem Oberbegriff des Anspruchs 1 bekannt. Verkehrsinformationsdaten werden per Rundfunk an das Fahrzeug übertragen und das Navigationssystem berechnet bei Bedarf eine an die aktuelle Verkehrslage angepasste Fahrtroute.

Ausgehend von diesem Stand der Technik liegt der Erfindung die Aufgabe zugrunde, einen Weg aufzuzeigen, wie bei einem Navigationssystem verbesserte Fahrtroutendaten zur Verfügung gestellt werden können.

Diese Aufgabe wird durch ein Verfahren mit den im Anspruch 1 angegebenen Merkmalen gelöst. Vorteilhafte Ausgestaltungen und Weiterbildungen ergeben sich aus den abhängigen Ansprüchen 2-10. Die Ansprüche 11-15 betreffen eine Vorrichtung zur Ermittlung von Fahrtroutendaten in einem Kraftfahrzeug.

Die Vorteile der Erfindung bestehen insbesondere darin, daß die Ermittlung der Fahrtroutendaten im Unterschied zum Stand der Technik in dem Sinne dynamisch erfolgt, daß sowohl Informationen über die aktuelle Verkehrslage als auch über eine Rundfunkübertragungsstrecke übertragene, detaillierte, regionalisierte Landkartendaten in die Ermittlung der Fahrtroutendaten eingehen. Durch das Verbreiten von detaillierten, regionalisierten Landkartendaten über ein Rundfunkübertragungssystem ist die Aktualität des zur Berechnung der Fahrtroutendaten notwendigen Kartenmaterials stets gewährleistet. Durch das Einbeziehen von Informationen über die aktuelle Verkehrslage und von Änderungen, die die Grobstruktur der Landkarte betreffen, in die Navigation läßt sich das Navigationsergebnis weiter verbessern. Ein weiterer Vorteil der Erfindung besteht darin, daß keine detaillierte Landkartendaten enthaltende CD-ROM notwendig ist, um Fahrtroutendaten ermitteln zu können

Mittels der im Anspruch 3 angegebenen Merkmale wird erreicht, daß die übertragenen Verkehrsinformationsdaten und die übertragenen detaillierten, regionalisierten Landkartendaten, die für die Ermittlung der Fahrtroutendaten notwendig sind, durch ein Ausschalten des Empfängers nicht verloren gehen können, da sie stets von Neuem zur Verfügung stehen.

Die im Anspruch 4 angegebenen Merkmale erleichtern ein Erkennen von Veränderungen in den übertragenen Landkartendaten.

Durch die im Anspruch 5 angegebenen Merkmale stehen kraftfahrzeugseitig nach einem Wiedereinschalten des Empfängers sofort Verkehrsinformationsdaten zur Verfügung.

Mittels den in Anspruch 6 angegebenen Maßnahmen wird die beschriebene Ermittlung der Momentanposition des Kraftfahrzeugs verbessert.

Durch die im Anspruch 9 angegebene nichtflüchtige Abspeicherung der übertragenen detaillierten, regionalisierten Landkartendaten stehen diese nach einem Wiedereinschalten des Empfängers sofort zur Verfügung, so daß ohne Zeitverzögerung eine Ermittlung von Fahrtroutendaten erfolgen kann.

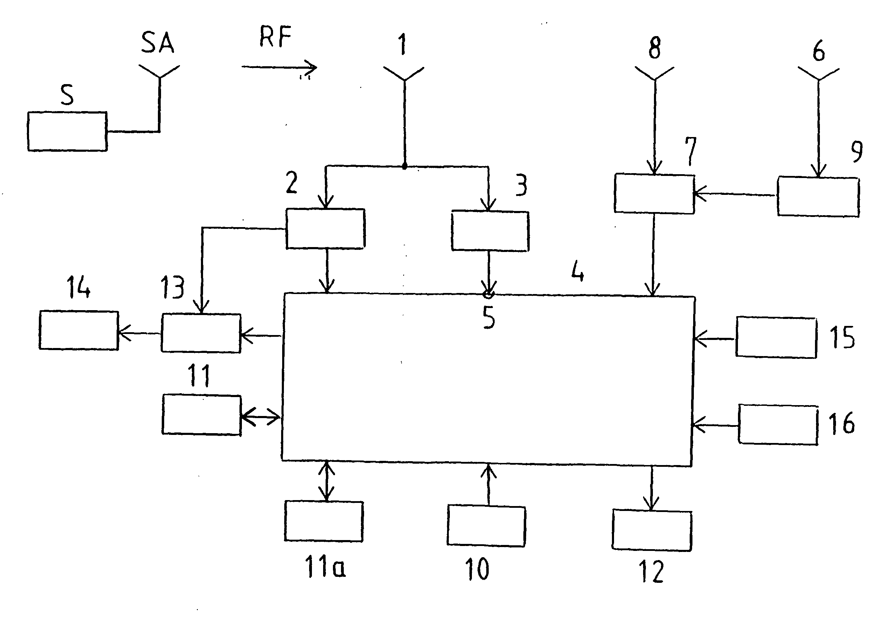

Weitere vorteilhafte Eigenschaften der Erfindung ergeben sich aus der Erläuterung eines Ausführungsbeispiels anhand der Figur:
Diese zeigt ein Blockschaltbild zur Erläuterung eines Verfahrens zur Ermittlung von Fahrtroutendaten in einem Kraftfahrzeug.

Gemäß diesem Verfahren werden in einem Rundfunksender S, bei welchem es sich vorzugsweise um einen DAB-Sender handelt, digitale Rundfunksignale RF erzeugt und über eine Sendeantenne SA ausgestrahlt. Bei diesen Rundfunksignalen RF handelt es sich um einen Datenstrom, in welchem im Zeitmultiplex unter anderem digitale Audiodaten, programmbezogene digitale Zusatzdaten, digitale Verkehrsinformationsdaten, digitale Landkartenänderungsdaten und digitale detaillierte, regionalisierte Landkartendaten enthalten sind.

Diese Signale werden einer mobilen Empfangsvorrichtung zugeführt, welche in einem Kraftfahrzeug angeordnet ist. Dort werden die übertragenen Rundfunksignale von einer Antenne 1 aufgenommen und an den Eingang eines ersten DAB-Empfangsmoduls 2 und den Eingang eines zweiten DAB-Empfangsmoduls 3 weitergegeben.

Das DAB-Empfangsmodul 2 ist zur Auswertung übertragener Audiodaten und zugehöriger programmbegleitender Zusatzdaten vorgesehen. Die am Ausgang des DAB-Empfangsmoduls 2 zur Verfügung stehenden Audiosignale werden einer Audiowiedergabevorrichtung 13 zugeführt. Diese ist mit einer Lautsprechereinheit 14 verbunden, über welche die Audiosignale abgestrahlt werden. Die programmbegleitenden Zusatzdaten, bei denen es sich beispielsweise um Titel einer momentan übertragenen Rundfunksendung handelt, werden einem Mikrocomputer 4 zugeführt, in welchem sie ausgewertet werden. Nach ihrer Auswertung können sie auf einem Display 12 dargestellt werden. Als besonders geeignet hat sich die Verwendung eines LCD-Displays ergeben.

Das zweite DAB-Empfangsmodul 3 ist zur Abtrennung der digitalen Verkehrsinformationsdaten, der digitalen Landkartenänderungsdaten und der digitalen detaillierten, regiorialisierten Landkartendaten aus dem übertragenen Datenstrom vorgesehen. Die am Ausgang des DAB-Empfangsmoduls 3 zur Verfügung stehenden Signale werden dem Mikrocomputer 4 zur Auswertung zugeführt.

Dieser erhält weiterhin Positionsdaten von einem GPS-Modul 7, welches über eine GPS-Antenne 8 von verschiedenen Satelliten abgestrahlte Signale empfängt und zur Ermittlung der momentanen Position des Kraftfahrzeugs an den Mikrocomputer 4 weiterleitet. Diesen Signalen des GPS-Moduls 7 können Korrekturdaten überlagert sein, die dem GPS-Modul 7 von einem DGPS-Empfänger 9 zugeführt werden. Der DGPS-Empfänger 9 ist an eine Empfangsantenne 6 angeschlossen und empfängt über diese die genannten Korrekturdaten zu den augenblicklichen GPS-Daten, welche Korrekturdaten von genau vermessenen Hilfssendern ausgestrahlt werden. Mittels dieser Korrekturdaten können die empfangenen GPS-Daten derart verbessert werden, daß die Position des Kraftfahrzeugs bis auf eine Genauigkeit von ca. 5 Meter ermittelt werden kann.
Die Positionsermittlung des Kraftfahrzeugs wird dadurch weiter verbessert, daß dem Mikrocomputer Ausgangssignale eines Tachometers 15 und/oder eines Gyroskops 16 zugeführt werden. Durch die Berücksichtigung der vom Gyroskop 16 gelieferten Signale kann wesentlich schneller als über GPS allein ein eventueller Fahrtrichtungswechsel festgestellt und bei der Ermittlung von Fahrtroutendaten berücksichtigt werden. Dies ist beispielsweise dann von Bedeutung, wenn das Fahrzeug um eine Kurve gefahren oder abgebogen ist. Durch Einbeziehen der Geschwindigkeitsinformation vom Tachometer 15 kann sogar für einen kurzen Zeitraum auch bei unterbrochenem Rundfunksignalempfang navigiert werden, beispielsweise in Tunnels. Die genannten Tachoinformationen werden direkt aus den Bordsignalleitungen des Kraftfahrzeugs abgeleitet.

Zur Ermittlung der Fahrtroutendaten werden weiterhin Landkartendaten verwendet, die einem landesweiten, d.h. für das Gesamtgebiet der Bundesrepublik Deutschland entsprechenden Ortsverzeichnis und einer landesweiten Grobstruktur der Landkarte entsprechen. Diese Daten enthalten beispielsweise die Namen und die Längen- und Breitengrade aller Ortschaften der Bundesrepublik Deutschland sowie Daten über alle Bundesstraßen und Autobahnen in der Bundesrepublik Deutschland. Diese Daten werden dem Mikrocomputer 4 von einem Speicher 11 zur Verfügung gestellt, bei dem es sich beispielsweise um ein RAM handelt.

Ferner benötigt der Mikrocomputer 4 zur Ermittlung der Fahrtroutendaten Informationen über das jeweilige Fahrtziel. Diese werden unter Verwendung einer Bedientastatur 10 eingegeben und an den Mikrocomputer 4 weitergeleitet.

Der Mikrocomputer 4 ist derart programmiert, daß er nach der Eingabe eines Fahrtzieles mittels der Bedientastatur 10 unter Verwendung der vom GPS-Modul 7, des Tachogenerators 15, des Gyroskops 16, des Speichers 11 und des DAB-Empfangsmoduls 3 gelieferten Daten Fahrtroutendaten ermittelt, die dem Benutzer beispielsweise in Form eines auf dem Display 12 dargestellten Fahrtrichtungspfeiles und/oder in Form eines über die Lautsprechereinheit 14 abgestrahlten Sprachsignals signalisiert werden.

Da es sich bei den vom DAB-Empfangsmodul 3 gelieferten Signalen um aktuelle Verkehrsmeldungen, um Landkartenänderungsdaten und um stets aktuelle detaillierte, regionalisierte Landkartendaten handelt, kann die Fahrtroutenermittlung in vorteilhafter Weise dynamisch erfolgen. Dies bedeutet, daß bei der Fahrtroutenermittlung nicht nur Informationen über zähfließenden Verkehr, Staus, stundenweise Straßensperrungen, tageweise Umleitungen und zeitweise Fahrtrichtungsänderungen berücksichtigt werden, sondern auch dauerhafte Veränderungen des Straßenbildes, die beispielsweise durch einen Neubau von Straßen und Autobahnabschnitten sowie durch dauerhafte Fahrtrichtungsänderungen bedingt sind.

Der Mikrocomputer 4 ist mit dem nichtflüchtigen Speicher 11 verbunden, der zur Abspeicherung der vom DAB-Empfangsmodul 3 gelieferten Signale vorgesehen ist, d. h. der aktuellen Verkehrsinformationsdaten, der Landkartenänderungsdaten und der detaillierten, regionalisierten Landkartendaten. Durch diese nichtflüchtige Abspeicherung wird sichergestellt, daß auch bei einem Ausschalten des Empfängers sofort nach dem Wiedereinschalten Daten zur Verfügung stehen, die zur Ermittlung von Fahrtroutendaten verwendet werden können. Im Speicher 11 werden vorzugsweise bereits werksseitig Landkartendaten abgespeichert, die dem landesweiten Ortsverzeichnis und der landesweiten Grobstruktur der Landkarte entsprechen.

Alternativ dazu können die empfangenen detaillierten, regionalisierten Landkartendaten auch in einem flüchtigen Speicher 11a des Empfängers zwischengespeichert werden, so daß sie für den Zeitraum, in welchem der Empfänger eingeschaltet ist, zur Verfügung stehen. Bei einem Ausschalten des Empfängers gehen diese Daten aber verloren, so daß nach dem Wiedereinschalten erst ein vollständiger Übertragungszyklus der Daten abgewartet werden muß, um wieder Fahrtroutendaten ermitteln zu können. Gemäß einer vorteilhaften Weiterbildung der Erfindung werden die Landkartendaten und/oder die Landkartenänderungsdaten im übertragenen Datenstrom zusammen mit einer Versionsnummer übertragen und im Speicher 11 bzw. 11a auch diese Versionsnummer abgespeichert. Dies erlaubt es in einfacher Weise, im Mikrocomputer 4 einen Vergleich zwischen der abgespeicherten Versionsnummer und der aus dem aktuellen Datenstrom abgeleiteten Versionsnummer durchzuführen, um zu erkennen, ob die gültige Version der Daten bereits im Speicher abgespeichert ist oder nicht. Ergibt dieser Vergleich, daß die aktuellen Daten noch nicht im Speicher abgespeichert sind, dann initiiert der Mikrocomputer 4 eine derartige Abspeicherung der aktuellen Daten inklusive deren Versionsnummer im Speicher.

Beim vorstehend beschriebenen System werden die Verkehrsinformationsdaten und die detaillierten Landkartendaten regionalisiert ausgestrahlt. Beispielsweise sind bundesweit 15 Senderegionen vorgesehen. Im Unterschied dazu werden die Landkartenänderungsdaten, die dem landesweiten Ortsverzeichnis und der landesweiten Grobstruktur der Landkarte zugehörig sind, in identischer Form bundesweit ausgestrahlt, d. h. in allen 15 Senderegionen.

Die detaillierten, regionaüsierten Landkartendaten sind Daten, die kartografischen und Routingkarten entnommen sind. Sie enthalten beispielsweise detaillierte Straßenbeschreibungen auch von Nebenstraßen, Informationen über Sehenswürdigkeiten und weitere Detailinformationen über diejenige Senderegion, in der sich das Fahrzeug momentan befindet.

Wird als Fahrtziel eine Ortschaft angegeben, die außerhalb der Senderegion gelegen ist, in der sich das Fahrzeug momentan befindet, dann werden zur Ermittlung der Fahrtroutendaten zunächst neben den detaillierten, regionalisierten Landkartendaten der momentanen Senderegion auch die im Fahrzeug abgespeicherten Landkartendaten verwendet, die dem landesweiten Ortsverzeichnis und der landesweiten Grobstruktur der Landkarte entsprechen. Kommt das Fahrzeug dann in den Sendebereich der nächsten Senderegion, dann werden die der vorherigen Senderegion zugehörigen detaillierten, regionalisierten Landkartendaten durch neue detaillierte, regionalisierte Landkartendaten ersetzt, die der nächsten Senderegion entsprechen. Dieser Ersatz der detaillierten, regionalisierten Landkartendaten einer Senderegion durch detaillierte, regionalisierte Landkartendaten einer nächsten Senderegion erfolgt solange, bis sich das Fahrzeug schließlich in derjenigen Senderegion befindet, in der das Fahrtziel gelegen ist. Dort erfolgt dann die Ermittlung von Fahrtroutendaten unter Verwendung der dem Fahrtziel zugehörigen detaillierten, regionalisierten Landkartendaten, bis das Fahrzeug schließlich das Fahrtziel erreicht hat.

## Patentansprüche

1. Verfahren zur Ermittlung von Fahrtroutendaten in einem Kraftfahrzeug, bei welchem ein Fahrtziel vorgegeben, die Momentanposition des Kraftfahrzeugs ermittelt und die Fahrtroutendaten durch Auswertung der Momentanposition des Kraftfahrzeugs, des vorgegebenen Fahrtzieles, aktueller Verkehrsinformationsdaten und kraftfahrzeugseitig abgespeicherter Landkartendaten ermittelt werden, wobei die aktuellen Verkehrsinformationsdaten über ein Rundfunkübertragungssystem übertragen werden,
**dadurch gekennzeichnet,**
**dass** die kraftfahrzeugseitig abgespeicherten Landkartendaten Daten sind, die einem landesweiten Ortsverzeichnis und einer landesweiten Grobstruktur der Landkarte entsprechen, dass zur Ermittlung der Fahrtroutendaten zusätzlich detaillierte, regionalisierte Landkartendaten verwendet werden und dass die detaillierten, regionalisierten Landkartendaten über ein Rundfunkübertragungssystem übertragen werden.

2. Verfahren nach Anspruch 1,
**dadurch gekennzeichnet,**
**dass** das Rundfunkübertragungssystem ein digitales Audio-Übertragungssystem ist.

3. Verfahren nach Anspruch 1 oder 2,
**dadurch gekennzeichnet,**
**dass** die Verkehrsinformationsdaten und die detaillierten, regionalisierten Landkartendaten digitale Daten sind und im Zeitmultiplex zusammen mit Audiosignaldaten in einem digitalen Datenstrom übertragen werden und/oder die kraftfahrzeugseitig abgespeicherten Landkartendaten nichtflüchtig abgespeichert sind und/oder die Verkehrsinformationsdaten, Landkartenänderungsdaten und die detaillierten, regionalisierten Landkartendaten zyklisch wiederholt übertragen werden und/oder die Verkehrsinformationsdaten Informationen über die momentane Verkehrsdichte und Informationen über zeitlich befristete Beschilderungsveränderungen enthalten und/oder regionalisiert übertragen werden.

4. Verfahren nach einem der vorhergehenden Ansprüche,
**dadurch gekennzeichnet,**
**dass** Landkartenänderungsdaten zusammen mit einer Versionsnummer übertragen werden.

5. Verfahren nach einem der vorhergehenden Ansprüche,
**dadurch gekennzeichnet,**
**dass** die Verkehrsinformationsdaten kraftfahrzeugseitig in einem nichtflüchtigen Speicher abgespeichert und bei aktiviertem Empfänger ständig aktualisiert werden.

6. Verfahren nach einem der vorhergehenden Ansprüche,
**dadurch gekennzeichnet,**
**dass** die Momentanposition des Kraftfahrzeugs unter Verwendung einen GPS-Empfängers ermittelt wird und insbesondere bei der Ermittlung der Momentanposition des Kraftfahrzeugs zusätzlich die Ausgangssignale eines Gyroskops und/oder eines Tachometers und/oder eines DGPS-Empfängers berücksichtigt werden, welcher zum Empfang von von Hilfssendern ausgestrahlten Korrekturdaten zu den momentanen GPS-Daten vorgesehen ist.

7. Verfahren nach einem der vorhergehenden Ansprüche,
**dadurch gekennzeichnet,**
**dass** die Landkartenänderungsdaten landesweit in allen Senderegionen ausgestrahlt werden.

8. Verfahren nach einem der vorhergehenden Ansprüche,
**dadurch gekennzeichnet,**
**dass** die Fahrtroutendaten in einem Mikrocomputer ermittelt werden und/oder die Fahrtroutendaten dem Benutzer optisch auf einem Display und/oder akustisch über einen Lautsprecher signalisiert werden.

9. Verfahren nach einem der vorhergehenden Ansprüche,
**dadurch gekennzeichnet,**
**dass** die detaillierten, regionalisierten Landkartendaten im Kraftfahrzeug flüchtig oder nichtflüchtig abgespeichert werden und/oder die Landkartendaten werksseitig in einem Speicher des Empfängers nichtflüchtig abgespeichert werden.

10. Verfahren nach einem der vorhergehenden Ansprüche,
**dadurch gekennzeichnet,**
**dass** die Landkartendaten durch über das Rundfunkübertragungssystem übertragene Landkartenänderungsdaten aktualisiert werden.

11. Vorrichtung zur Ermittlung von Fahrtroutendaten in einem Kraftfahrzeug mit einer Bedientastatur (10) zur Eingabe eines Fahrtzieles, einer Vorrichtung (6-9, 15, 16) zur Ermittlung von Positionsdaten des Kraftfahrzeugs, einem nichtflüchtigen Speicher (11), in welchem Landkartendaten abgespeichert sind, die einem landesweiten Ortsverzeichnis und einer landesweiten Grobstruktur der Landkarte entsprechen und einem Mikrocomputer (4), welcher mit der Bedientastatur (10), der Vorrichtung (6-9, 15, 16) zur Ermittlung von Positionsdaten und dem nichtflüchtigen Speicher (11) verbunden und zur Ermittlung der Fahrtroutendaten vorgesehen ist, und welcher einen Eingangsanschluss (5) für aktuelle Verkehrsinformationsdaten aufweist und derart programmiert ist, dass er die aktuellen Verkehrsinformationsdaten bei der Ermittlung der Fahrtroutendaten berücksichtigt,
**dadurch gekennzeichnet,**
**dass** der Mikrocomputer (4) einen Eingangsanschluss (5) für über eine Rundfunkübertragungsstrecke übertragene detaillierte, regionalisierte Landkartendaten aufweist und derart programmiert ist, dass er die detaillierten, regionalisierten Landkartendaten bei der Ermittlung der Fahrtroutendaten berücksichtigt.

12. Vorrichtung nach Anspruch 11,
**dadurch gekennzeichnet,**
**dass** die Vorrichtung (6-9, 15, 16) zur Ermittlung der Positionsdaten ein GPS-Modul (7) und insbesondere zusätzlich einen DGPS-Empfänger (9) und/oder ein Gyroskop und/oder einen Tachometer aufweist.

13. Vorrichtung nach Anspruch 11 oder 12
**dadurch gekennzeichnet,**
**dass** die Vorrichtung einen nichtflüchtigen Speicher (11) zur Abspeicherung von Landkartenänderungsdaten und/oder detaillierter, regionalisierter Landkartendaten aufweist und insbesondere der nichtflüchtige Speicher (11) einen Speicherbereich zur Abspeicherung einer den Landkartenänderungsdaten und/oder den regionalisierten Landkartendaten zugeordneten Versionsnummer aufweist und die Vorrichtung insbesondere einen Vergleicher (4) aufweist, in welchem ein Vergleich einer abgespeicherten Versionsnummer mit einer aus einem übertragenen Rundfunksignal abgeleiteten Versionsnummer erfolgt, und der Mikrocomputer bei negativem Vergleichsergebnis die Abspeicherung der neuen Versionsnummer und neuer Landkartenänderungsdaten und/oder neuer detaillierter, regionalisierter Landkartendaten im Speicher initiiert.

14. Vorrichtung nach einem der Ansprüche 11 bis 13,
**dadurch gekennzeichnet,**
**dass** sie ein Display (12) und/ oder einen Lautsprecher (14) aufweist, mittels derer die Fahrtroutendaten dem Benutzer signalisierbar sind.

15. Vorrichtung nach einem der Ansprüche 11 bis 14,
**dadurch gekennzeichnet,**
**dass** sie zwei DAB-Empfangsmodule (2,3) aufweist, von denen eines zur Selektierung von Audiodaten und das andere zur Selektierung von aktuellen Verkehrsinformationsdaten, Landkartenänderungsdaten und detaillierten, regionalisierten Landkartendaten vorgesehen ist.

## Claims

1. A method for the determination of trip route data in a motor vehicle, wherein a trip destination is set, the instantaneous position of the motor vehicle is determined and the trip route data are determined by evaluation of the instantaneous position of the motor vehicle, of the set trip destination, of current traffic information data and of map data stored onboard, with the current traffic information data being transmitted via a radio broadcasting system,
**characterised in that**
the map data stored onboard are data which correspond to a nationwide index of towns and a nationwide rough structure of the map;
**in that** detailed, regionalised map data are additionally used for the determination of the trip route data; and
**in that** the detailed, regionalised map data are transmitted via a radio broadcasting system.

2. A method in accordance with claim 1, **characterised in that** the radio broadcasting system is a digital audio broadcasting system.

3. A method in accordance with claim 1 or claim 2, **characterised in that** the traffic information data and the detailed, regionalised map data are digital data and are transmitted in time multiplex together with audio signal data in a digital data stream; and/or **in that** the map data stored onboard are stored in a non-volatile manner; and/or the traffic information data, map change data and the detailed, regionalised map data are transmitted in cyclic repetition; and/or the traffic information data contain data on the instantaneous traffic density and information on time-limited signage changes and/or are transmitted in a regionalised manner.

4. A method in accordance with any one of the preceding claims, **characterised in that** map change data are transmitted together with a version number.

5. A method in accordance with any one of the preceding claims, **characterised in that** the traffic information data are stored in a non-volatile memory onboard and are continuously activated when the receiver is activated.

6. A method in accordance with any one of the preceding claims, **characterised in that** the instantaneous position of the motor vehicle is determined using a GPS receiver and, in particular on the determination of the instantaneous position of the motor vehicle, the output signals of a gyroscope and/or of a speedometer and/or of a DGPS receiver are additionally taken into account which is/are provided for the reception of correction data with respect to the instantaneous GPS data broadcast by auxiliary transmitters.

7. A method in accordance with any one of the preceding claims, **characterised in that** the map change data are broadcast nationwide in all transmission regions.

8. A method in accordance with any one of the preceding claims, **characterised in that** the trip route data are determined in a microcomputer; and/or **in that** the trip route data are signalled to the user visually on a display and/or acoustically via a loudspeaker.

9. A method in accordance with any one of the preceding claims, **characterised in that** the detailed, regionalised map data are stored in a volatile or non-volatile manner in the motor vehicle; and/or **in that** the map data are stored in a non-volatile manner in a memory of the receiver ex works.

10. A method in accordance with any one of the preceding claims, **characterised in that** the map data are updated via map change data transmitted via the radio broadcasting system.

11. An apparatus for the determination of trip route data in a motor vehicle comprising an operating keyboard (10) for the input of a trip destination, an apparatus (6-9, 15, 16) for the determination of position data of the motor vehicle, a non-volatile memory (11) in which map data are stored which correspond to a nationwide index of towns and a nationwide rough structure of the map, and a microcomputer (4) which is connected to the operating keyboard (10), to the apparatus (6-9, 15, 16) for the determination of position data, and to the non-volatile memory (11) and is provided for the determination of the trip route data and which has an input connection (5) for current traffic information data and is programmed such that it takes account of the current traffic information data in the determination of the trip route data,
**characterised in that**
the microcomputer (4) has an input connection (5) for detailed, regionalised map data transmitted via a radio transmission path and is programmed such that it takes account of the detailed, regionalised map data in the determination of the trip route data.

12. An apparatus in accordance with claim 11, **characterised in that** the apparatus (6-9, 15, 16) has a GPS module (7) and in particular additionally a DGPS receiver (9) and/or a gyroscope and/or a speedometer for the determination of the position data.

13. An apparatus in accordance with claim 11 or claim 12, **characterised in that** the apparatus has a non-volatile memory (11) for the storage of map change data and/or of detailed, regionalised map data and the non-volatile memory (11) in particular has a memory region for the storage of a version number associated with the map change data and/or with the regionalised map data and the apparatus in particular has a comparator (4) in which a comparison of a stored version number with a version number derived from a transmitted radio signal takes place and the microcomputer initiates the storage of the new version number and of new map change data and/or of new detailed, regionalised map data in the memory on a negative comparison result.

14. An apparatus in accordance with any one of the claims 11 to 13, **characterised in that** it has a display (12) and/or a loudspeaker (14) by means of which the trip route data can be signalled to the user.

15. An apparatus in accordance with any one of the claims 11 to 14, **characterised in that** it has two DAB receiver modules (2, 3) of which one is provided for the selection of audio data and the other is provided for the selection of current traffic information data, map change data and detailed, regionalised map data.

## Revendications

1. Procédé de détermination de données d'itinéraire routier dans un véhicule automobile, dans lequel une destination d'itinéraire est prédéterminée, la position momentanée du véhicule automobile est déterminée et les données d'itinéraire routier sont déterminées par évaluation de la position momentanée du véhicule automobile, de la destination d'itinéraire prédéterminée, des données d'information de circulation actuelles et de données de carte géographique, mémorisées côté véhicule automobile, les données d'information de circulation actuelle étant transmises par l'intermédiaire d'un système de transmission par radio,
**caractérisé en ce que**
les données de carte géographique, mémorisées côté véhicule automobile, sont des données, correspondant à un répertoire de lieux, s'étendant au territoire et à une structure grossière, s'étendant au territoire, de la carte géographique,
**en ce que**, pour déterminer les données d'itinéraire routier, on utilise, en plus, des données de carte géographique régionalisées détaillées, et **en ce que** les données de carte géographique régionalisées détaillées sont transmises par un système de transmission par radio.

2. Procédé selon la revendication 1, **caractérisé en ce que**
le système de transmission par radio est un système de transmission audio numérique.

3. Procédé selon la revendication 1 ou 2, **caractérisé en ce que**
les données d'information de circulation et les données de carte géographique régionalisées détaillées sont des données numériques et sont transmises en multiplex temporel, conjointement avec des données de signaux audio, dans un flux de données numériques, et/ou les données de carte géographique, mémorisées côté véhicule automobile, sont mémorisées de façon non volatile et/ou les données d'information dé circulation, les données de modification de carte géographique et les données de carte géographique régionalisées détaillées sont transmises de façon répétée cycliquement, et/ou les données d'information de circulation sont des informations sur la densité de circulation momentanée et contiennent des informations concernant des modifications de signalisation, faites pendant certains délais, et/ou sont transmises de façon régionalisée.

4. Procédé selon l'une des revendications précédentes, **caractérisé en ce que**
les données de modification de carte géographique sont transmises conjointement avec un numéro de version.

5. Procédé selon l'une des revendications précédentes, **caractérisé en ce que**
les données d'information de circulation sont mémorisées, côté véhicule automobile, dans une mémoire non volatile et sont actualisées en permanence, lorsque le récepteur est activé.

6. Procédé selon l'une des revendications précédentes, **caractérisé en ce que**
la position momentanée du véhicule automobile est déterminée en utilisant un récepteur GPS et, en particulier, lors de la détermination de la position momentanée du véhicule automobile, en plus, les signaux de sortie d'un gyroscope et/ou d'un tachymètre et/ou d'un récepteur DGPS sont pris en considération, le récepteur DGPS étant prévu pour recevoir des donnée de correction émises par des émetteurs auxiliaires au sujet des données GPS momentanées.

7. Procédé selon l'une des revendications précédentes, **caractérisé en ce que**
les données de modification de carte géographique sont émises dans les limites du territoire, dans toutes les régions comprenant des émetteurs.

8. Procédé selon l'une des revendications précédentes, **caractérisé en ce que**
les données d'itinéraire routier sont déterminées dans un micro-ordinateur et/ou les données d'itinéraire routier sont signalés à l'utilisateur, optiquement, sur un afficheur d'affichage et/ou, acoustiquement, par un haut-parleur.

9. Procédé selon l'une des revendications précédentes, **caractérisé en ce que**
les données de carte routière régionalisée détaillée sont mémorisées côté véhicule automobile de façon volatile ou non volatile, et/ou les données de carte géographique sont mémorisées en atelier, de façon non volatile, dans une mémoire du récepteur.

10. Procédé selon l'une des revendications précédentes, **caractérisé en ce que**
les données de carte géographique sont actualisées au moyen de données de modification de carte géographique, transmises par le système de transmission par radio.

11. Dispositif de détermination de données d'itinéraire routier dans un véhicule automobile, avec un clavier opérateur (10) pour introduire une destination d'itinéraire, un dispositif (6 à 9,15,16) pour déterminer des données de position du véhicule automobile, une mémoire (11) non volatile, dans laquelle sont mémorisées des données de carte géographique qui correspondent à un répertoire de lieux s'étendant au territoire, et une structure grossière, s'étendant au territoire, de la carte géographique, et avec un micro-ordinateur (4), relié au clavier opérateur (10), au dispositif (6 à 9,15,16) pour déterminer des données de position, et à la mémoire (11) non volatile, et prévu pour déterminer les données d'itinéraire routier et qui présente un raccordement d'entrée (5) pour des données d'information de circulation actuelle et est programmé de manière qu'il prenne en considération les données d'information de circulation actuelle lors de la détermination des données d'itinéraire routier,
**caractérisé en ce que**
le micro-ordinateur (4) présente un raccordement d'entrée (5) pour des données de carte géographiques régionalisées détaillées, transmises par une voie de transmission par radio, et est programmé de manière à prendre en considération les données de carte géographique régionalisée détaillées, lors de la détermination des données d'itinéraire routier.

12. Dispositif selon la revendication 11,
**caractérisé en ce que**
le dispositif (6 à 9,15,16) présente pour la détermination des données de position, un module GPS (7) et, en particulier, en plus un récepteur DGPS (9) et/ou un gyroscope et un tachymètre.

13. Dispositif selon la revendication 11 ou 12,
**caractérisé en ce que**
le dispositif présente une mémoire (11) non volatile, pour mémoriser des données de modification de carte géographique et/ou des données de carte géographique détaillées, régionalisées et, en particulier, la mémoire (11) non volatile présente une zone de mémoire, pour mémoriser un numéro de version, associé aux données de modification de carte géographique et/ou aux données de carte géographique régionalisées, et le dispositif présente en particulier un comparateur (4), dans lequel s'effectue une comparaison d'un numéro de version mémorisé avec un numéro de version dérivé d'un signal radio ayant été transmis, et le micro-ordinateur, dans le cas où le résultat de la comparaison est négatif, lance la mémorisation du nouveau numéro de version et des nouvelles données de modification de carte géographique et/ou des nouvelles cartes géographiques détaillées régionalisées dans la mémoire.

14. Dispositif selon l'une des revendications 11 à 13,
**caractérisé en ce**
**qu'**il présente un afficheur (12) et/ou un haut-parleur (14), à l'aide desquels les données d'itinéraire routier peuvent être signalées à l'utilisateur.

15. Dispositif selon l'une des revendications 11 à 14,
**caractérisé en ce**
**qu'**il présente deux modules de réception DAB (2,3), dont l'un est prévu pour la sélection des données audio et l'autre pour la sélection de données d'information de circulation actuelles, de données de modification de carte géographique actuelles et de données de carte géographique régionalisées détaillées actuelles.
